# EUROPEAN PATENT APPLICATION

(11) **EP 4 813 707 A1**
(43) Date of publication of application: **30.09.2026**
(21) Application number: 26166991.5
(22) Date of filing: 24.03.2026
(51) Int. Cl.: B60K 1/04

(54) **VEHICLE STRUCTURE**

(30) Priority: 26.03.2025 JP 2025052171
(71) Applicant: Toyota Jidosha Kabushiki Kaisha, Toyota-shi, Aichi-ken 471-8571 (JP)
(72) Inventor: YONEZAWA, Shota, Toyota-shi, Aichi-ken 471-8571 (JP); BABA, Ryusuke, Toyota-shi, Aichi-ken 471-8571 (JP); YAMAMOTO, Yo, Toyota-shi, Aichi-ken 471-8571 (JP)
(74) Representative: TBK

(57) **Abstract**

A vehicle structure that includes: a battery case that is disposed along a floor of a vehicle and houses battery cells inside; a battery device case that is disposed on the upper side of the battery case on a cabin side and houses a battery device inside; and a charging device that is disposed on the vehicle upper side of the battery device and is fixed to the battery device case.

## Description

### BACKGROUND

### Technical Field

This disclosure relates to a vehicle structure.

### Related Art

Japanese Patent Application Laid-open (JP-A) No. 2020-173918 discloses an energy storage device including a plurality of battery cells. The energy storage device described in this publication is provided on the lower side of a rear seat of a vehicle.

In this connection, in a configuration where the energy storage device includes a charger, it is desired to be able to easily perform maintenance such as inspection and replacement of the charger, but the configuration described in JP-A No. 2020-173918 does not take this into account.

### SUMMARY

It is an object of this disclosure to obtain a vehicle structure that can facilitate maintenance of a charger.

A vehicle structure of a first aspect includes: a battery case that is disposed along a floor of a vehicle and houses battery cells inside; a battery device case that is disposed on the upper side of the battery case on a cabin side and houses a battery device inside; and a charging device that is disposed on the vehicle upper side of the battery device and is fixed to the battery device case.

In the vehicle structure of the first aspect, the charging device is fixed to the battery device case in a state in which it is disposed on the vehicle upper side of the battery device.
In this configuration, maintenance of the charging device can be easily performed from the cabin side compared with a configuration where the charging device is disposed in the same space as the battery device or on the lower side of the battery device case.

A vehicle structure of a second aspect is the vehicle structure of the first aspect, further including a cover case that covers the charging device from the vehicle upper side.

In the vehicle structure of the second aspect, the charging device can be covered by the cover case.

A vehicle structure of a third aspect is the vehicle structure of the second aspect, wherein the battery device case includes a battery device upper case disposed on the upper side of the battery device and a battery device lower case disposed on the lower side of the battery device, and the charging device is disposed on the upper side of a vehicle front portion of the battery device upper case.

In the vehicle structure of the third aspect, the charging device is disposed on the upper side of a vehicle front portion of the battery device upper case, so maintenance of the charging device can be easily performed from the cabin side.

A vehicle structure of a fourth aspect is the vehicle structure of the third aspect, wherein the vehicle structure includes a seat cushion above the battery device upper case, and the distance in the vehicle up and down direction between the battery device upper case and the seat cushion at the vehicle front end portion of the charging device is set wider than the distance in the vehicle up and down direction between the battery device upper case and the seat cushion at the vehicle rear end portion of the charging device.

In the vehicle structure of the fourth aspect, the distance in the vehicle up and down direction between the battery device upper case and the seat cushion at the vehicle front end portion of the charging device is set wider than the distance in the vehicle up and down direction between the battery device upper case and the seat cushion at the vehicle rear end portion of the charging device. In this configuration, workspace when performing maintenance on the charging device can be widened.

A vehicle structure of a fifth aspect is the vehicle structure of the fourth aspect, wherein the distance in the vehicle up and down direction between the battery device upper case and the seat cushion widens heading from the vehicle rear end portion of the charging device to the vehicle front end portion of the charging device.

In the vehicle structure of the fifth aspect, the distance in the vehicle up and down direction between the battery device upper case and the seat cushion widens heading from the vehicle rear end portion of the charging device to the vehicle front end portion of the charging device. In this configuration, workspace when performing maintenance on the charging device can be widened even more.

The vehicle structure pertaining to this disclosure can facilitate maintenance of a charger.

### BRIEF DESCRIPTION OF THE DRAWING

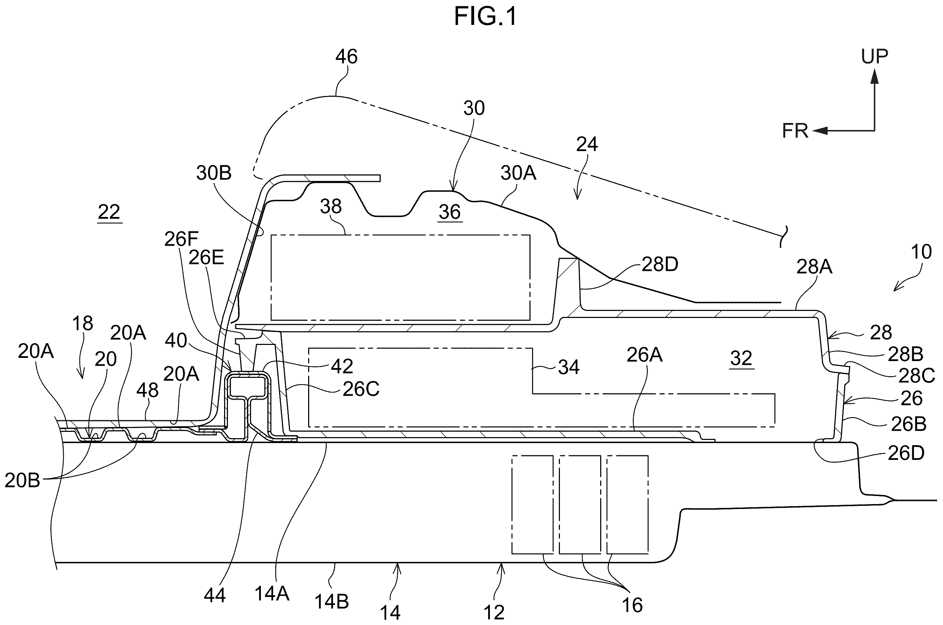

FIG. 1 is cross-sectional view showing a cross-section of a lower portion of a vehicle on a rear portion side of a cabin as cut along the front and rear direction and the up and down direction.

### DETAILED DESCRIPTION

A lower portion 10 of a vehicle to which a vehicle structure pertaining to an embodiment of this disclosure has been applied will now be described using FIG. 1. It will be noted that arrow FR shown in FIG. 1 indicates the forward direction of the vehicle and that arrow UP indicates the upward direction of the vehicle. Furthermore, unless otherwise noted, when the directions of front/rear, up/down, and left/right are used in the following description, these will be understood to mean front/rear in the vehicle front and rear direction, up/down in the vehicle up and down direction, and left/right in the vehicle left and right direction (vehicle width direction).

As shown in FIG. 1, the lower portion 10 of the vehicle is provided with a battery pack 12 that stores electrical power supplied to a motor of the vehicle. The battery pack 12 is configured to include a battery case 14 formed in the shape of a box and a plurality of battery cells 16 housed inside the battery case 14. The battery case 14 is configured to include an upper wall portion 14A that configures the upper portion of the battery case 14 and a lower wall portion 14B that configures the lower portion of the battery case 14. The upper wall portion 14A and the lower wall portion 14B are formed in tabular shapes that extend in the front and rear direction and the left and right direction with their thickness direction coinciding with the up and down direction. The plural battery cells 16 are disposed next to each other in the front and rear direction between the upper wall portion 14A and the lower wall portion 14B.

Furthermore, the lower portion 10 of the vehicle is provided with a floor forming member 20 that forms a floor 18 of the vehicle. The floor forming member 20 is disposed along the upper wall portion 14A of the battery case 14 on the upper side of the battery case 14. In the floor forming member 20, a plurality of projecting beads 20A formed in upwardly projecting shapes are formed along the vehicle width direction. Furthermore, in the floor forming member 20, a plurality of recessed beads 20B formed in downwardly recessed shapes are formed along the vehicle width direction. The plural projecting beads 20A and the plural recessed beads 20B are alternately disposed along the front and rear direction.

Furthermore, a battery device case 24 that houses various types of devices is provided on the upper side of the battery case 14 on a cabin 22 side. The battery device case 24 is configured to include a battery device lower case 26 and a battery device upper case 28, which form a divided structure in the up and down direction, and a cover case 30, which covers the battery device upper case 28 from above.

The battery device lower case 26 is made of die-cast aluminum formed using an aluminum alloy. The battery device lower case 26 includes a lower wall portion 26A that extends along the upper wall portion 14A of the battery case 14, a rear wall portion 26B that extends upward from the rear end of the lower wall portion 26A, and a front wall portion 26C that extends upward from the front end of the lower wall portion 26A. An opening 26D through which a harness, for example, passes is formed in the rear portion of the lower wall portion 26A. Furthermore, the battery device lower case 26 includes a front flange portion 26E that extends forward from the upper end of the front wall portion 26C and a boss portion 26F that projects downward from the front portion of the front flange portion 26E.

The battery device upper case 28 is, like the battery device lower case 26, made of die-cast aluminum formed using an aluminum alloy. The battery device upper case 28 includes an upper wall portion 28A that extends in the front and rear direction and the left and right direction, a rear wall portion 28B that extends downward from the rear end of the upper wall portion 28A, and a rear flange portion 28C that extends rearward from the lower end of the rear wall portion 28B. Furthermore, the battery device upper case 28 includes an upwardly projecting portion 28D that projects upward from a front and rear direction intermediate portion of the upper wall portion 28A. The battery device upper case 28 is attached from above to the battery device lower case 26, whereby a first device disposition space 32 is formed between the battery device upper case 28 and the battery device lower case 26. In the first device disposition space 32 is disposed a junction box 34 serving as a device and a first device and a battery device. Furthermore, the junction box 34 is fixed via fixing members to the lower wall portion 26A of the battery device lower case 26.

The cover case 30 is formed by, for example, stamping a steel sheet material so that it is thinner in thickness than the battery device lower case 26 and the battery device upper case 28. Here, the cover case 30 of this embodiment has a divided structure (as an example, a tripartite structure) in the vehicle width direction. The flexural rigidity of the cover case 30 in the vehicle up and down direction is set to a lower flexural rigidity than the flexural rigidity of the battery device lower case 26 and the battery device upper case 28 in the vehicle up and down direction. Furthermore, the cover case 30 includes an upper wall portion 30A, which is disposed facing the upper wall portion 28A of the battery device upper case 28 in the up and down direction, and a front wall portion 30B, which extends downward from the front end of the upper wall portion 30A. The cover case 30 is attached from above to the battery device upper case 28, whereby a second device disposition space 36 is formed between the cover case 30 and the battery device upper case 28. On the front side of the upwardly projecting portion 28D in the second device disposition space 36 is disposed a charger 38 serving as a device and a second device and a charging device. Furthermore, the charger 38 is fixed via fixing members to the upper wall portion 28A of the battery device upper case 28. The charger 38 may be a type of charging circuit configured to charge the battery cells 16 using power supplied from an external source, and may include, for example, a power conversion circuit or switching elements.

A crossmember 40 is disposed along the vehicle width direction on the upper side of the upper wall portion 14A of the battery case 14 and the front side of the front wall portion 26C of the battery device lower case 26. The crossmember 40 is configured to include a first crossmember 42, which is formed in a hat-shaped cross-sectional shape that opens downward in the side sectional view shown in FIG. 1, and a second crossmember 44, which is joined to the first crossmember 42 in a state in which most of it is disposed inside the first crossmember 42. The rear end portion of the floor forming member 20 is joined to the front end portion of the crossmember 40. Furthermore, the front end portion of the battery device lower case 26 is fixed to the crossmember 40 by screwing, into nuts provided in the crossmember 40, bolts that have been inserted from above into the front flange portion 26E and the boss portion 26F of the battery device lower case 26.

A seat cushion 46 configuring part of a rear seat of the vehicle is provided on the upper side of the cover case 30. Furthermore, a carpet 48 is provided on the lower side of the seat cushion 46, and the carpet 48 covers the battery device case 24 and the crossmember 40 from the front and covers the floor forming member 20 from above.

Furthermore, the distance in the up and down direction between the battery device upper case 28 and the seat cushion 46 at the front end portion of the charger 38 is set wider than the distance in the up and down direction between the battery device upper case 28 and the seat cushion 46 at the rear end portion of the charger 38. Moreover, the distance in the up and down direction between the battery device upper case 28 and the seat cushion 46 widens heading from the rear end portion of the charger 38 to the front end portion of the charger 38.

### (Action and Effects of This Embodiment)

Next, the action and effects of this embodiment will be described.

In the embodiment described above, the charger 38 is fixed to the battery device upper case 28 in a state in which it is disposed on the upper side of the junction box 34. In this configuration, maintenance of the charger 38 can be easily performed from the cabin 22 side compared with a configuration where the charger 38 is disposed in the same first device disposition space 32 as the junction box 34 or on the lower side of the battery device case 24. More specifically, in this embodiment, maintenance of the charger 38 can be performed by detaching the cover case 30 from the battery device upper case 28. Furthermore, maintenance of the junction box 34 can be performed by detaching the battery device upper case 28 from the battery device lower case 26. In this way, in the vehicle structure of this embodiment, maintenance of various types of devices can be facilitated.

Furthermore, in this embodiment, the charger 38 is fixed to the upper wall portion 28A in a state in which it is disposed on the upper side of the upper wall portion 28A that is a front portion of the battery device upper case 28. Because of this, maintenance of the charger 38 can be easily performed from the cabin 22 side.

Furthermore, in this embodiment, the distance in the up and down direction between the battery device upper case 28 and the seat cushion 46 at the front end portion of the charger 38 is set wider than the distance in the up and down direction between the battery device upper case 28 and the seat cushion 46 at the rear end portion of the charger 38. In this configuration, workspace when performing maintenance on the charger 38 can be widened.

Furthermore, in this embodiment, the distance in the up and down direction between the battery device upper case 28 and the seat cushion 46 widens heading from the rear end portion of the charger 38 to the front end portion of the charger 38. In this configuration, workspace when performing maintenance on the charger 38 can be widened even more.

Furthermore, in this embodiment, the cover case 30 has a divided structure in the vehicle width direction, so workability when carrying the cover case 30 into the cabin 22 and workability when carrying the cover case 30 out from the cabin 22 can be improved.

Furthermore, in this embodiment, the charger 38 is covered from above by the cover case 30, so the charger 38 can be protected by the cover case 30.

Furthermore, in this embodiment, the battery device lower case 26 and the battery device upper case 28 that form the first device disposition space 32 are made of die-cast aluminum. In this configuration, the ability to dissipate heat from the junction box 34 can be enhanced compared with a configuration where the battery device lower case 26 and the battery device upper case 28 are not made of die-cast aluminum.

Furthermore, in this embodiment, the battery device case 24 is provided on the upper side of the battery case 14 on the cabin 22 side, and various types of devices (e.g., the junction box 34 and the charger 38) are housed inside the battery device case 24. Furthermore, the seat cushion 46 is provided on the upper side of the battery device case 24. Moreover, the crossmember 40 is disposed along the vehicle width direction on the vehicle upper side of the battery case 14. The front end portion of the battery device lower case 26 is fixed to the crossmember 40, whereby loads from the front portion of the battery device lower case 26 and the battery device upper case 28 that configure the battery device case 24 are received by the crossmember 40. In this configuration, some of the loads from the seat cushion 46 side can be received by the crossmember 40 via the battery device case 24. Because of this, the loads from the seat cushion 46 side can be inhibited from being input to the various devices.

Furthermore, in this embodiment, the thickness of the cover case 30 is formed thinner than the thickness of the battery device lower case 26 and the battery device upper case 28. Because of this, when loads are input via the seat cushion 46 to the battery device case 24, the cover case 30 can deform and absorb the loads.

Furthermore, in this embodiment, the flexural rigidity of the cover case 30 in the vehicle up and down direction is set to a lower flexural rigidity than the flexural rigidity of the battery device lower case 26 and the battery device upper case 28 in the vehicle up and down direction. Because of this, when loads are input via the seat cushion 46 to the battery device case 24, the cover case 30 can be easily deformed in the vehicle up and down direction.

It will be noted that some of the configurations of the embodiment described above may also be omitted or changed.

Although an embodiment of the disclosure has been described above, the disclosure is not limited to what is described above and can be modified and implemented in various ways, in addition to what is described above, without departing from the spirit thereof.

## Claims

1. A vehicle structure comprising:
a battery case that is disposed along a floor of a vehicle and houses battery cells inside;
a battery device case that is disposed on the upper side of the battery case on a cabin side and houses a battery device inside; and
a charging device that is disposed on the vehicle upper side of the battery device and is fixed to the battery device case.

2. The vehicle structure of claim 1, further comprising a cover case that covers the charging device from the vehicle upper side.

3. The vehicle structure of claim 2, wherein
the battery device case includes a battery device upper case disposed on the upper side of the battery device and a battery device lower case disposed on the lower side of the battery device, and
the charging device is disposed on the upper side of a vehicle front portion of the battery device upper case.

4. The vehicle structure of claim 3, wherein
the vehicle structure includes a seat cushion above the battery device upper case, and
the distance in the vehicle up and down direction between the battery device upper case and the seat cushion at the vehicle front end portion of the charging device is set wider than the distance in the vehicle up and down direction between the battery device upper case and the seat cushion at the vehicle rear end portion of the charging device.

5. The vehicle structure of claim 4, wherein the distance in the vehicle up and down direction between the battery device upper case and the seat cushion widens heading from the vehicle rear end portion of the charging device to the vehicle front end portion of the charging device.
